(19) Europäisches Patentamt
European Patent Office
Office européen des brevets

(11) **EP 4 764 593 A1**

(12) **EUROPEAN PATENT APPLICATION**

(43) Date of publication:
**24.06.2026 Bulletin 2026/26**

(21) Application number: **24383414.0**

(22) Date of filing: **19.12.2024**

(51) International Patent Classification (IPC):
*G01S 7/285* (2006.01)     *G01S 7/35* (2006.01)
*G01S 7/41* (2006.01)     *G01S 13/04* (2006.01)
*G01S 13/50* (2006.01)     *G01S 13/88* (2006.01)

(52) Cooperative Patent Classification (CPC):
**G01S 13/04; G01S 7/285; G01S 7/358;
G01S 7/417; G01S 13/50; G01S 13/886**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Idneo Technologies, S.A.U.
08100 Mollet del Vallès, Barcelona (ES)**

(72) Inventors:
• **MATEO GARRIDO, Juan Francisco
29601 MARBELLA (ES)**
• **COBOS MARCOS, Christian Diego
04720 AGUADULCE (ES)**
• **PALOMO AVELLANEDA, Rafel
08401 GRANOLLERS (ES)**
• **GEMIO VALERO, Joan
08192 SANT QUIRZE DEL VALLES (ES)**

(74) Representative: **ZBM Patents - Zea, Barlocci &
Markvardsen
Rambla de Catalunya, 123
08008 Barcelona (ES)**

(54) **LIFE PRESENCE DETECTION**

(57) There is disclosed a computer-implemented method for detection of life within a vehicle using a radar sensor system, the radar sensor system comprising at least one transmitter, a receiver, and a controller, the computer-implemented method comprising transmitting, using the at least one transmitter, radar waves to at least one vehicle compartment of the vehicle; generating, using the at least one receiver, a radar signal from radiation reflected as a result of the transmitted radar waves; and operating the controller to, based on the radar signal, generate a detection of life within the vehicle. There is also provided a system comprising a controller configured to perform a method to generate, based on a received radar signal, a detection of life.

Figure 1

## Description

### TECHNICAL FIELD

This disclosure relates to a computer-implemented method for life presence detection based on radar signals. In particular, the present disclosure relates to a radar-based occupant detection systems and methods.

### BACKGROUND

Due to the rapid increase in fatal accidents caused by neglect of occupants (e.g., children) in vehicles, research and development related to systems to prevent this are being actively conducted.

Nowadays some children are left in vehicles, e.g., in motor vehicles, cars or buses, sometimes leading to fatal consequences. Systems that detect or determine presence of life inside the vehicle are called CPD for Child Presence Detection. Some CPD systems detect life inside the vehicle by detecting physiological movements of the rib cage when breathing. Determining life inside the vehicle can be done by camera or indirectly from detecting opening of doors. Such solutions may detect any object with movement where a movement signal may be a noise signal caused by an unwanted vibration of the vehicle or a signal caused by the movement of a general object e.g., a load placed on a seat.

### SUMMARY

In a first aspect, the present disclosure provides a computer-implemented -CI- method for detection of life, e.g., unattended life, within a vehicle, e.g., a motor vehicle, and for example within a motor vehicle compartment, using a radar sensor system, the radar sensor system comprising at least one transmitter, at least one receiver and a controller, the computer-implemented method comprising: transmitting, for example transmitting 23GHz to 26GHz radar waves, and for example by a doppler radar sensor, using the at least one transmitter, to at least one vehicle compartment; generating, using the at least one receiver, a radar signal from radiation reflected as a result of the transmitted radar waves; and operating the controller to generate, based on the radar signal, a detection of life within the vehicle or motor vehicle compartment. In the present disclosure, detection of life may be understood as absence of inoccupancy. Detection of life or occupant detection may be understood as probability of life, or as a global probability of life, or as a preliminary probability of life, or as a partial probability of life or as a preliminary detection of life or as a partial detection of life or as a global detection of life. The sum of a probability of life and probability of inoccupancy is 100%.

To generate the detection of life may comprise outputting two or more partial detections of life. That is, a first partial detection and further partial detections. Preferably, at least a first partial detection, a second partial detection, and a third partial detection. Each partial detection is obtained by processing a portion of the radar signal, preferably, in a sliding window. The sliding window may be defined as a selection of time in which the radar signal is processed. The sliding window may be referred to as a moving window or rolling window, and refers to a segment that "slides" across the radar signal. The sliding window may be of a fixed-duration and may slide step by step through the radar signal. The sliding window has a predefined duration, length or size. The predefined duration may be 2 seconds or greater than 2 seconds or may be, for example, between 3 seconds and 9 seconds, such as between 3 seconds and 8 seconds, or preferably between 4 seconds and 7 seconds. Of course, other durations of the sliding window are possible, for example, the sliding window may comprise 6 seconds, or between 6 seconds and 10 seconds.

In the context of application of the disclosure, a sliding window of duration as disclosed herein allows analyzing or processing a sufficient portion of the radar signal representative of movements inside a motor vehicle or an in-cabin compartment of a motor vehicle such that the presence of life, e.g., of a child, can be, at least partially, detected. Partial detection refers to a detection considering a portion of the radar signal of a duration equaling the duration or length of the sliding window. Each computed or determined or generated partial detection may be outputted by the methods of the disclosure every time a partial detection is generated, or every "sliding window length". Advantages related to the output of a partial detection every "sliding window length" with "sliding window length" less than 10 seconds, comprises that a first detection of forgotten babies may be performed in less than 10 seconds.

In the case where a living being, e.g., a child, is left on a compartment or seat in a motor vehicle, the methods of the disclosure comprise transmitting radar waves which are to be reflected by the living being. In such cases, the sliding window covers a portion of the reflected radar signal, which portion is to be processed to obtain or output a partial detection of life. The portion of the radar signal to be processed represents at least a portion of a physiological movement of the living being, for example the movement of the thoracic cage. The predefined duration of the sliding window is therefore long enough to provide a portion of the radar signal representative of the physiological movement of the living being, and short enough to provide a partial detection, or a reliable partial detection, in a minimum detection time. The predefined duration responds therefore to a compromise between providing a representative portion of the radar signal and with a minimum delay. Furthermore, in cases of limited storage capacity of a storage unit, for example in communication with a controller, processor or microprocessor or controller or microcontroller to be embedded in a radar sensor system of the present disclosure, the predefined duration of the sliding window reduces the computational load of the computer-implemented method while maintaining effective detection of life presence within the vehicle compartment. Advantageously the foregoing allows the use of controllers or embedded controllers with a smaller storage capacity and therefore allows obtaining a more economical solution.

Methods of the disclosure allow determining and outputting a first partial detection of life, for example associated with an alarm in the case detection of life is positive, or with a high probability, for example with a 70%-100% probability of positive detection of life inside the vehicle (e.g., car). Methods of the disclosure further allow, for example, after 60 seconds, outputting a further detection of life, i.e., a preliminary or global or final detection of life which may be more reliable than the first partial probability, by performing steps as detailed in the following paragraphs.

The processing in the sliding window may be performed by a machine learning model. The machine learning model may be pre-trained. The machine learning model may be pre-trained or be trained to classify input signals based on at least a portion of the radar signal.

Preferably each partial detection of life is obtained by processing the respective successive portions of the radar signal in successive shifts by an offset of the sliding window. Successive shifts may comprise sliding the sliding window by an offset in successive events. The offset, also referred to as hop size or step size, refers to a number of samples or time units by which a sliding window moves forward after processing one segment or portion of the radar signal. The offset may determine how much overlap or gap exists between successive windows. For example, the offset may determine that neither overlap nor gap exists between successive windows or portions of radar to be processed which may comprise that the offset equals the window length. For example, the offset may determine that an overlap exists between successive windows or portions of radar to be processed which may comprise that the offset is smaller than the window length. The offset determining an overlap between successive sliding windows allows maintaining temporal coherence between portions of the radar signal in different sliding windows. The offset may be constant or may vary between successive shifts. Preferably, the offset remains constant across all shifts.

The method may comprise determining a preliminary detection of life based on the two or more partial detections of life. For example, a preliminary detection may be a function of a first partial detection, and a second partial detection. For example, a preliminary detection may be a function of a first partial detection, a second partial detection and a third partial detection. The partial detection may comprise a partial probability of detection and the preliminary detection may comprise a preliminary probability of detection. The partial or preliminary detections or the probability of partial or preliminary detections may include quantitative and/or qualitative detections, for example, 40% of presence, or 50 % of presence or 80% of presence, or occupied, or empty. The detection of life or the partial detection of life or the preliminary detection of life may include a confidence level, for example, a categorical output such as no idea, maybe, pretty sure, fairly sure, or sure.

It is preferred that a first partial detection is outputted based on the radar signal in the sliding window in a first position. The method further comprises, iteratively, and until a final condition is met, performing the following: shifting the sliding window by an offset; outputting a further partial detection of life by processing a portion of the radar signal in the shifted sliding window, and determining a preliminary detection of life based on the first partial detection and one or more further partial detections of life. For example, a second partial detection is outputted and the preliminary detection of life is based on a global detection. The global detection may be, for example, a combination of the first partial detection and the second partial detection. For example, a second partial detection is outputted, a third partial detection is outputted and the preliminary detection of life is based on the third partial detection and a global detection. The global detection may be, for example, a combination of the first partial detection and the second partial detection. The combination may be a polynomial combination, or may be e.g., an average, or a weighted combination, e.g., weighed sum or others.

The final condition determines an instant in time when partial detections and preliminary detections of life stop being generated or outputted. The final condition may comprise, for example, that the sliding window has been shifted a maximum number of times. For example, if the sliding window has a length or duration of 6 seconds, then after 40 seconds or after 60 seconds the output of partial detections and preliminary detections of life may be stopped, which may imply that, for an offset of 1 second, the sliding window has been shifted 40 times or 45 times or 60 times. In other or combinable examples, after a detection time, e.g., 40 seconds or 60 seconds has elapsed, the output of partial detections and preliminary detections of life may be predetermined to be stopped. In other or combinable examples, an external finalization alert may be received which may imply that the partial and preliminary detections are forced to stop, where external may comprise received from an entity different from the controller or processor implementing the method for detection of life or generated by the controller but externally while implementing a different method.

The preliminary detection based on the sliding windows, i.e., based on the partial detections in each of the sliding windows, allows reducing the memory capacity requirements of the controller while minimizing the detection time, as previously indicated. In examples of the present disclosure the controller or processor, for example, has less than 1 MB (Megabytes) of storage capacity, preferably, less than 512 KB (Kilobytes), more preferably, less than 256 KB.

Besides, processing a limited portion of the radar signal compared to processing a longer portion of the radar signal allows reducing the computational weight of the computer-implemented methods of the disclosure. The advantage of a lightweight method or algorithm is allowing embedding the algorithm inside a controller, a processor or a microprocessor or microcontroller in the automotive sector. The controller, processor or microprocessor may be "a cost optimized processor or microprocessor". Besides, the fact of basing the preliminary detection on a global detection further allows increasing the detection accuracy, since the detection of the presence of life depends not only on a last "partial detection", but also depends on previous "partial detections", where "previous" comprises from the triggering of the computer-implemented methods of the disclosure.

Besides, the methods of the disclosure perform preferably a combination of partial detections to provide a global detection, which global detection is used to provide historical context to the preliminary detection of life as will become apparent from the description of the figures below.

The methods of the disclosure allow a "contextualized" detection of life based on one or more "limited" or "focused" partial detections of life. Advantageously the preliminary "high level" detection is not sensitive to instantaneous or temporal fluctuations of the received radar signal for example which may contain environmental noise within or outside the vehicle leading to false positives, for example. The preliminary detection may avoid the presence of false negatives in the case when a partial detection indicates that the vehicle is not occupied, i.e., life not detected, when a vehicle is actually occupied.

In examples, the methods of the disclosure the step to generate, based on the radar signal, a detection of life, comprises preprocessing the radar signal by performing at least feature extraction to the radar signal. The preprocessing, in some examples, further includes stretch correction, outlier correction and trend removal which combination of preprocessing techniques surprisingly allows a relatively high performance, making it possible to implement the CI method in real time or online, without delays, or in other words, in real-life.

In examples of the methods of the disclosure, at least a portion of the radar signal is processed by machine learning, ML, model. In some examples, the ML model is based on a decision trees architecture including a plurality of branches and a plurality of nodes; the ML model includes, for each node of the plurality of nodes, one or more parameters defining an availability of the node; the ML model is trained to obtain a partial detection of life in a vehicle; the ML model is loaded into a memory; and the method comprises modifying the decision trees architecture by varying one or more of the parameters defining the availability of each node.

In a further aspect, there is provided a system comprising a controller configured to implement a method to generate, based on a received radar signal, a detection of life, as described in the claims.

The advantages described in relation to any of the above-mentioned aspects may analogously apply to the rest of the aspects.

## FIGURES

Figure 1 shows an example of a system 100 according to the disclosure.

Figure 2A shows an example of implementation of an example method according to the disclosure.

Figure 2B shows an example of implementation of an example method according to the disclosure.

Figure 3 shows an example method of the disclosure comprising generating or outputting one or more partial detections by a machine learning model.

Figure 4 shows example method of the disclosure.

Figure 5A shows a representation of an example of implementation of a method according to the disclosure.

Figure 5B shows a representation of an example of implementation of a method according to the disclosure.

Figure 6 shows a weight function.

Figure 7 shows a distribution of partial detections.

Figure 8 shows a power spectrum of a radar signal.

Figure 9 shows a radar signal with an outlier to be eliminated.

Figure 10 shows an example of trend removal to a radar signal.

Figure 11 shows an example representation of the complete implementation of the CI method of the disclosure.

Figure 12 shows an example representation of parametrization of a ML model.

## DETAILED DESCRIPTION

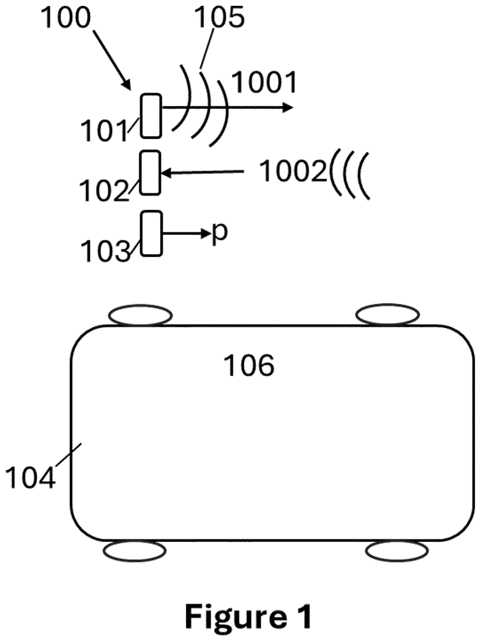

Figure 1 shows an example of a system 100 according to the disclosure, for example a radar sensor system, comprising one transmitter 101, at least one receiver 102 and a controller or processor 103, in wired or wireless communication with the at least one receiver, configured to implement the CI method of the disclosure. The CI method comprises transmitting 1001, using the transmitter 101, radar waves 105 to at least one vehicle compartment 104 of a vehicle 106. The system 100 is configured to determine the presence of human life inside the vehicle. The radar sensing system may operate in the 24 GHz band, or "Continuous Wave" band (CW). The radar sensor system may be a doppler radar sensor transmitting at 23GHz to 26GHz radar waves. The system may comprise a transceiver and a microprocessor.

The radar sensor system is configured to detect the presence of life within the vehicle by analyzing movements within the car and identifying patterns that align with vital signs, such as physiological parameters (e.g., breathing) and other life-indicative movements. This analysis seeks to identify similarities with known vital patterns to ensure accurate detection. A possible application comprises detection of forgotten babies, providing a robust first detection in less than 10 seconds, where robust may comprise that the detection of life -human, or the baby- is performed for all positions of the vehicle (e.g., car), and is agnostic to vibrations, movements and/or people near and outside the vehicle (e.g., car). The system 100 may be referred to as a direct sensing system or device. Radar waves provide for an accessible transmission form of information with low power consumption compared to cameras. Besides, the use of radar waves benefits from having no occluded zones whereas a camera does not normally capture all the locations at a compartment of the vehicle, where a baby may sit.

The method further comprises generating, using the at least one receiver, a radar signal from radiation reflected 1002 as a result of the transmitted radar waves 105; and operating the controller to generate, based on the radar signal, a detection of life, e.g., unattended life, within the vehicle compartment 104. In examples, a detection of life comprises a probability of detection of life.

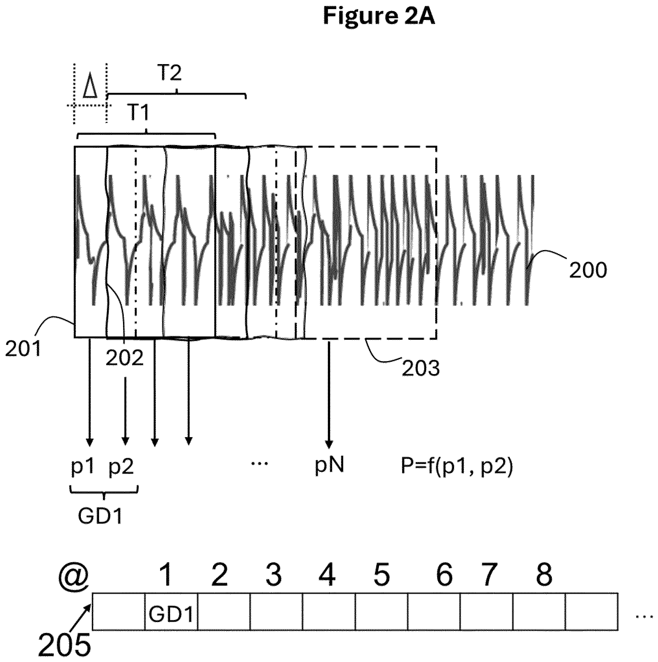

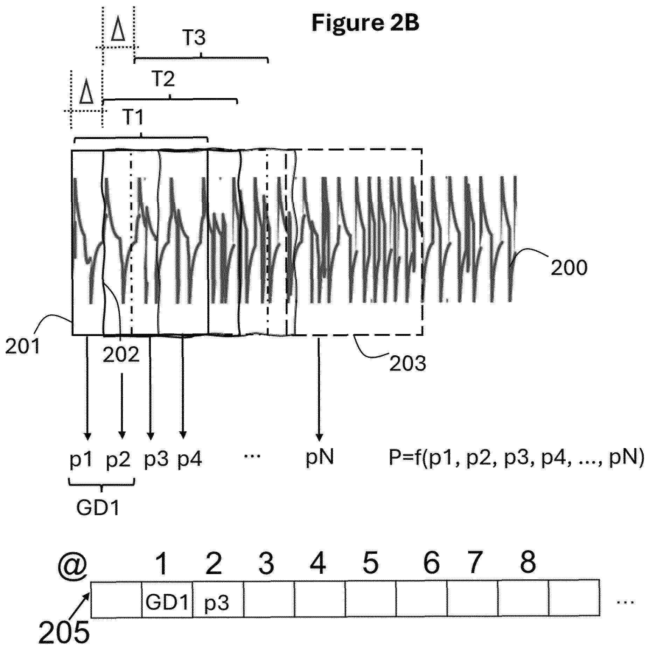

Figures 2A and 2B show an example of implementation of an example method according to the disclosure for detection of life within a vehicle using a radar sensor system. The figure shows an example of generating and/or outputting a detection of life based on partial detections of life. Figures 2A and 2B show a radar signal 200 and staggered windows 201, 202, ..., 203, wherein each of the staggered windows results from shifting the sliding window 202 by different offsets. Each of the staggered sliding windows 201, 202, ..., 203 define respective portions in time of the radar signal 200. The example method generates a first partial detection, p1, in the initial sliding window 201, of detection of life for a first portion of radar signal associated to a first sliding window 201. The example method generates a second partial detection, p2, of detection of life for a second portion of radar signal associated to a second sliding window 202, and successively, a third partial detection, p3, etc., until and an nth partial detection, pN, of detection of life for an nth portion of radar signal associated to a nth sliding window 203. The example method then determines and possibly outputs a preliminary detection, P, of life based on the two or more partial detections p1, p2, or P =f(p1, p2, p3, p4, ..., pN). The sliding window of the example of figures 2A and 2B may be of a duration or length of 1 second. Each partial detection p1, p2, ..., pN, is obtained by processing a portion of 1 second of the radar signal 200 in a sliding window 201, 202, 203.

The method of figure 2A comprises, in examples, outputting a first partial detection of life, p1, by processing a portion of the radar signal of the sliding window 200 in a first position, T1; outputting a second partial detection, p2, of life by processing a portion of the radar signal of the sliding window in a second position, T2, the second position, T2, of the sliding window resulting from shifting the sliding window in the first position, T1, by an offset ∆; and determining a first global detection GD1 based on the first and second partial detections p1, p2; and wherein determining the preliminary detection of life P based on the two or more partial detections comprises: storing the first global detection GD1 in a first location of a data structure; and determining the preliminary detection of life based on contents of the data structure.

The method of figure 2B comprises, in examples, outputting a first partial detection of life, p1, by processing a portion of the radar signal of the sliding window 200 in a first position, T1; outputting a second partial detection, p2, of life by processing a portion of the radar signal of the sliding window in a second position, T2, the second position, T2, of the sliding window resulting from shifting the sliding window in the first position, T1, by an offset ∆; outputting a third partial detection p3 of life by processing a portion of the radar signal 200 of the sliding window in a third position, T3, the third position of the sliding window T3 resulting from further shifting the sliding window in the second position, T2, by an offset, which in the case of the example of figure 2B is the same offset ∆; and determining a first global detection GD1 based on the first and second partial detections p1, p2; and wherein determining the preliminary detection of life P based on the two or more partial detections comprises: storing the first global detection GD1 in a first location of a data structure; storing the third partial detection p3 of life in a second position of the data structure; and determining the preliminary detection of life based on contents of the data structure.

The above process may be referred to as a GORS, for Global Output Ranking System, and which allows accumulating partial detections of a certain number of sliding windows, for example first and second partial detections, or more partial detections, to obtain a robust and contextualized preliminary or final detection. In examples, the preliminary detections are based on partial detections considering context from partial detections inversely proportional to time. In other words, when a sliding window, i, (i being a generic index) is further away from a current time, the preliminary detection pi, where pi is generic and not shown in the figures, obtained in the sliding window i, may have less relevance than other more recent partial probabilities pj to compute the preliminary detection of life. The GORS in such examples, may accumulate weighted partial detections of a certain number of windows to obtain a robust and contextualized prediction.

Advantageously, the preliminary or "overall" detection at an instant of time that is based not only in a current sliding window but that is also based on two or more, or all preceding partial detections from a first partial detection based on a first sliding window, allows generating a detection of life which contemplates all the information of historical events in the vehicle during at least the first window which may comprise a sliding window in which the execution of the method to detect life is triggered.

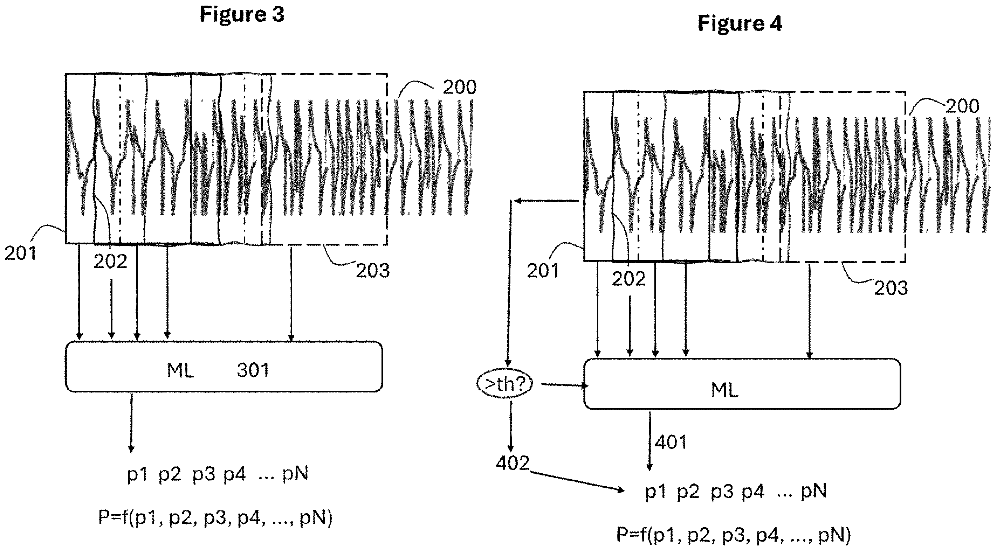

In examples, as shown in figure 3, the method comprises generating or outputting one or more partial detections by a machine learning model, ML. For example, all the partial detections may be generated by the ML model, which in figure 3 is implemented by a machine learning module 301.

For example, as shown in figure 4, the method may comprise that if an indicator value of the radar signal in a portion associated to a sliding window, for example a standard deviation of the portion of the radar signal 200 in the sliding window 201, is greater than a predetermined threshold, th, then the method comprises, as shown with reference 401, generating, based on the portion of the radar signal, a partial detection by a machine learning ML model, wherein the ML model has been trained to output a partial detection given a training input signal, the training input signal based on one or more training radar signals. Other portions (e.g., 202, 203...) of the radar signal 200 may provide an indicator value not greater than the predetermined threshold th and the method may comprise generating a predefined partial detection, as shown with reference 402, of life within the vehicle. In examples the predefined partial detection 402 may be "empty vehicle" or "negative partial detection of life".

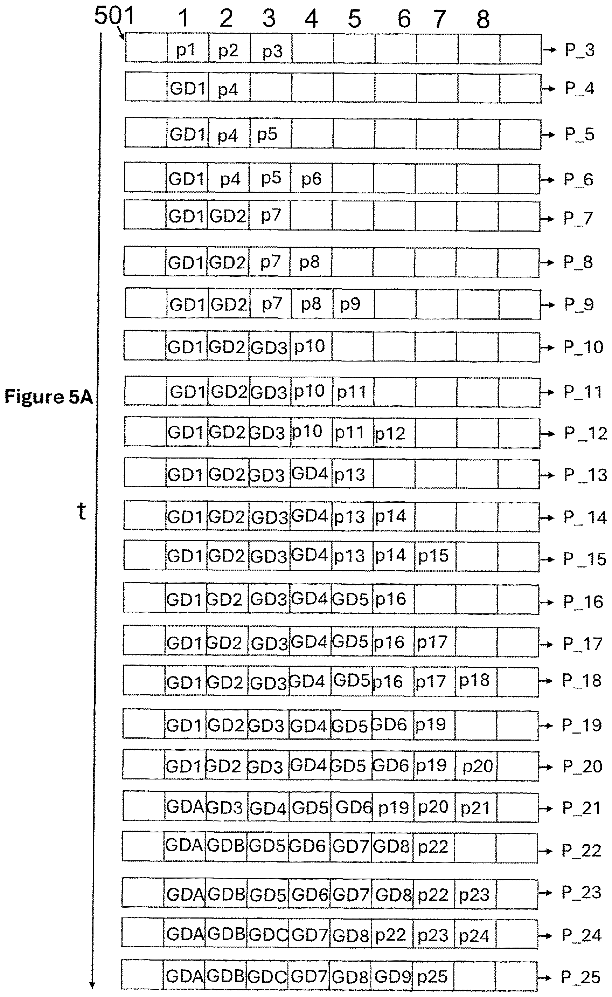

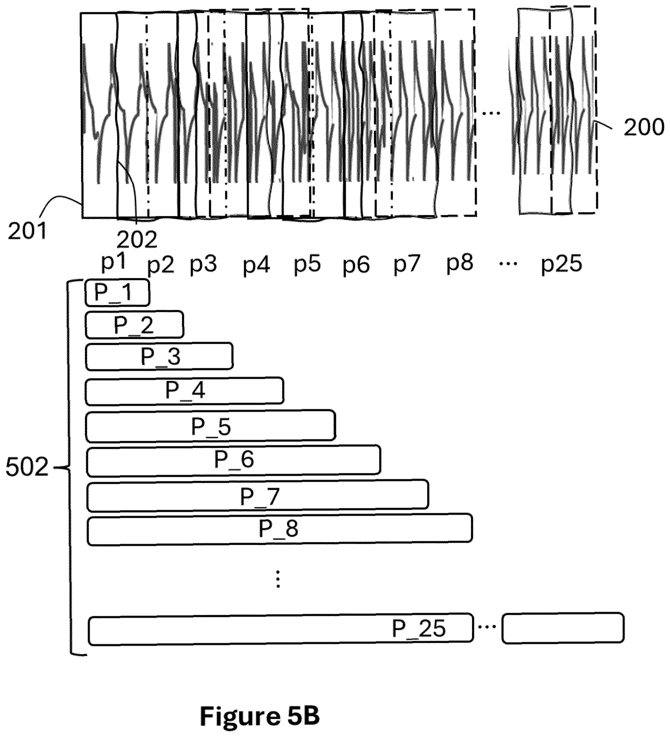

In some examples the method comprises assigning a weight to each of the partial detections p1, p2, p3... and generating the preliminary detection based on a weighed combination of the partial detections. For example, the weights may be the same across the partial detections. In other examples a first weight of a first partial detection may be lower than a second weight of a second partial detection if the first partial detection is obtained by processing a portion of the radar signal at a first sliding window, where the first sliding window occurs prior in time than a second sliding window, where both first and second sliding windows are prior in time than a current time, wherein the second partial detection is obtained by processing a portion of the radar signal at the second sliding window. The foregoing may be better understood with reference to figures 5A and 5B.

Figure 5A shows a representation of an example of implementation of a method according to the disclosure. Figure 5A shows assembled data 501 and their evolution in time, t, through implementation of a method according to the disclosure. As seen previously, the method may comprise generating the partial detection p1, then outputting a preliminary detection of life P (not shown) based on p1; the method may further comprise generating a second partial detection p2, then generating a further preliminary detection P (not shown), based on p1 and p2. The method may further comprise generating the partial detection p3, then generating a further preliminary detection P, as shown in Figure 5A, based on p1 and p2 and p3. Figure 5A shows the assembly of data comprising partial detections p1, p2, p3 and the preliminary detection P. Once the method has generated the 3 partial detections, the evolution of a time step or "offset" of the sliding window (not shown) results in generating the partial detection p4; the method may comprise that if a number of generated partial detections is greater than a maximum number of time windows, for example 3 in Figure 5A, but may be other number of partial detections for example 4, then grouping partial detections associated to respective sliding windows amount by amount, for example the amount being 3, starting by partial detections associated to the farthest preceding sliding window. The method may therefore comprise generating a further preliminary detection P based on p4 and based on a global detection GD1, where GD1 may be computed as a grouping or combination of p1, p2, p3.

Continuing successive shifts of a sliding window (not shown) by successive offsets, the time evolution of the method may generate further partial detections, p5, p6, p7, and the method may further comprise grouping or combining, e.g., averaging, the partial detections of each group. The method may further comprise to generate the preliminary detection P of life as a combination, e.g., polynomial or linear combination, of all the preceding partial detections and the partial detection in the portion of radar signal in a current sliding window and/or all grouped partial detections.

For example, with reference to Figure 5A, generating a preliminary detection of life, P_8, after 7 shifts of the sliding window, or after p8 associated with a sliding window number 8, implies that there have been 7 preceding sliding windows or that the sliding window has been shifted 7 times. As 7 is greater than a maximum of 3, then grouped or global partial detections GD1, GD2 are computed by combining, e.g., averaging, partial detections p1, p2, p3 to generate GD1 and combining p4, p5, p6 to generate GD2. Such grouped or global, or averaged, partial detections, GD1, GD2 are then used, in conjunction with p7, to compute a preliminary detection of life P_8 as a combination, e.g., polynomial, or linear combination, of [the partial detection p7, the partial detection p8, GD1, and GD2]. The preliminary detection at a given point in time is therefore generated as a function of all the former partial detections of life. As seen in the figure 5A, the combination or grouping is extended to global detections, GD, such that, once the values of partial detections and global detections GD have reached a maximum of storage units, for example 8 storage units in a vector or in a data structure, then the global detection GD1, GD2, etc., start being grouped as GDA, GDB, etc. For example, grouping GD1 and GD2 provides GDA; grouping GD3 and GD4 provides GDB, grouping GD5 and GD6 provides GDC, grouping GD7 and GD8 would provide GDD and successively. Advantageously, a limited number of storage units is respected by grouping previous partial and global detections to provide a preliminary detection while considering all preceding context information. In the context of the disclosure, such example allows providing a preliminary detection of life which considers context information from the beginning of the execution of the method while limiting the memory resources necessary for the execution, which makes it possible to embed the algorithm and associate lightweight execution in a controller or processor or microprocessor. Figure 5A shows that in a limited number of 8 memory positions referred to as "1, 2, 3, 4, 5, 6, 7, 8" several context information associated to several partial detections, Figure 5A showing until partial detection 25, "p25" are considered to provide a preliminary detection, P.

Figure 5B shows partial detections associated to different sliding windows 201, 202 203, etc., where the partial detections p1, p2, p3, etc., are the partial detections of figure 5A. Figure 5B further shows preliminary detections P_1, P_2, ..., P_25, in time, where the preliminary detections P_1, P_2, ..., P_25 are those of figure 5A. Each preliminary detection is based on all the context from the beginning which is stored in 8 storage units in a vector or in a data structure. In other words, the sliding window maintains 8 storage units when partial detection p25 is determined and when preliminary detection P25 is determined. Figure 5B represents how the method to detect life of the disclosure preserves the past predictions or the context of past predictions, which is represented as long block 502, in order to give more robust and contextualized output. The different blocks 502 represent how much context data is being considered for determining the preliminary detection P_i, with i=1, 2, 3, ... 25. Advantageously, all data related to all preceding partial detections is considered and a continuous detection without discontinuities is provided.

In examples, every 3 partial detections, the GORS performs the mean of the three partial detections and saves the value in a global detection GD value array that is used as part of the inputs for a confidence computation, up to 7 GD values. When the 7 GD values are reached and the GORS tries to add another GD value, the first two global values GD1 GD2 are averaged. The GORS may contemplate three different situations: sit 1: 7 GD values + 1 partial detection, sit 2: 7 GD values + 2 predictions, sit 3: 7 GD values + 3 predictions.

Any of the partial detections or the preliminary detections or the global detections may be a number between 0 and 1 or a percentage. Any of the detections may be a probability of detection in a sliding window or in a group of sliding windows.

In some examples, the method for detection of life of the disclosure comprises obtaining and/or outputting a confidence value for/associated to one or more partial detections of life or for the preliminary detection of life. The confidence value may be a number between 0 and 1. In examples, a number of sliding windows or partial detections are used to compute the confidence value, for example 8 sliding windows, and the GD value array contains 8 positions of memory storage. In the example situation sit 1: 7 GD values + 1 partial detection, there are not storage issues. In the situation sit 2: sit 2: 7 GD values + 2 predictions, the global detection GD array is at its maximum since the GD values + predictions sum more than 8. Then, as in the case explained for Figure 5A, a mean of the first two GD values is obtained when performing the confidence computation just to compute the confidence, but the value in the array does not change, contrarily to the case in Figure 5A. In the case of situation sit 3, the mean of the third GD value and the fourth GD value may also be performed, as the case in Figure 5A. In examples, the method comprises four different confidence values or confidence levels: "High unlikelihood", "Likelihood is low", "At least 75% of likelihood", and "High likelihood".

In examples, partial detections may be weighted based on time. In these examples the method rewards most recent partial detections, where the weight function used is inversely proportional to time elapsed or shifted sliding window.

$$weight = \frac{1}{1 + \text{time difference} * A}$$

where A is a hyperparameter to smooth or unsmooth the weight distribution and time difference increases with distance from the current time or sliding window to the sliding window from which the partial detection to be weighed has been obtained or processed.

An example hyperparameter "A" may equal a number of partial detections to consider for the confidence computation. "A" may be 8 and may be the minimum number of sliding windows to update the confidence computation and is a number of windows which allows keeping certain memory and time consumption limitations.

Once a number of sliding windows to compute the confidence is selected, a suitable value of A may be inferred. The "A" value may provide with a function that has a slope but does not give excessive importance to only one of the partial detections. An example value of the hyperparameter "A" is 0.3 for 8 sliding windows.

The sum of the weights of the 8 sliding windows may be greater than one and therefore, the confidence value may not be between 0 and 1. In examples, to maintain the confidence value between 0 and 1, all weights are added together and each of the weights is divided by the addition allowing providing weights that add up to 1.

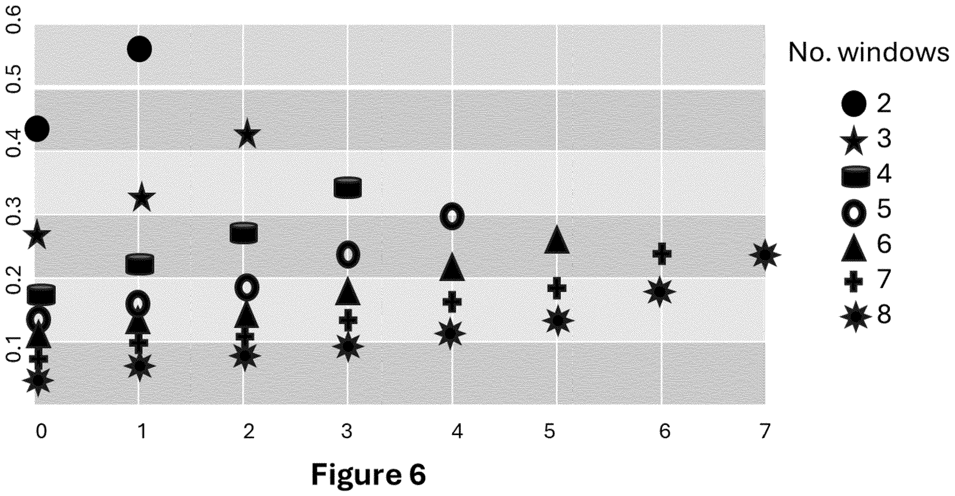

Figure 6 shows a weight function with the hyperparameter A = 0.3. The figure shows a balanced distribution for each particular case of N sliding windows. In particular, the figure shows the weights by which the partial detections are weighted, superimposing the weights for 2 sliding windows, 3 sliding windows and successively up to 8 sliding windows. As shown, for 8 windows the recent 2 windows (6, 7), being almost 0,5 have higher separation of respective weights compared to the separation of respective weights of the first 2 windows (0, 1), being almost 0,01.

In examples, one or more partial detections are performed by processing a portion of a radar signal by a machine learning model, ML model. The machine learning model may, in some examples, be based on decision trees or nested decision trees, for example the ML model may comprise LightGBM or LGBM implemented by Microsoft. Nested decision trees classify an input signal. Nested decision trees are a combination of nested conditions associating results of the conditions to one result or output. In examples, between 15 and 50 decision trees of variable lengths may be used, for example 25.

In examples the ML model may use a method for training called gradient boosting. In gradient boosting, estimators are trained sequentially. A first estimator classifies the maximum number of signals. A second estimator takes the errors made by the first estimator and tries to correct them and so on. A very low error is thereby obtained. Gradient boosting is characterized by being a small and computationally light model which is advantageous to fit in an embedded the model inside a controller or processor or a microprocessor or microcontroller.

In examples, the ML model does not try to extract features and patterns from classes but focuses on the majority class and anything that does not meet conditions that the algorithm has calculated may be classified as the "other class". In examples, when the standard deviation of the input signal or signal based on the radar signal, which may include some preprocessing, is greater than 1.2, then a signal at least based on the radar signal may be input into the ML model for the ML model to output a partial detection; if the ML model outputs an "occupied vehicle compartment" or "life detection positive", the partial detection in the respective sliding window is considered as occupied. Otherwise, the window is considered as empty or "life detection negative".

In examples where the gradient boosting is used, some of the trees are expressly trained for very specific situations. This means that even in nominal cases the partial detection may not reach 100% or 1. Such fact may be an issue in situations where full resolution is not achieved and about 10% of the resolution is lost. In examples, some partial detections are rewarded; the associated output is 100% sure. For example, providing or outputting an occupied result with a 94% probability is a more confident situation than outputting an occupied result with a 65% probability. In addition to the weighting system explained above, in some examples the sliding windows where the algorithm is surer of the output may also be assigned more weight. In such examples, a probability distribution may be added to the weights. The intervals and types of functions may be chosen so that the weight distribution is as smooth as possible, without steps and completely continuous but ensuring that the weight distribution solving the resolution problem and rewarding in a progressive and moderate way.

An example probability distribution may be given by the following table 1, where P is a probability value given or outputted by the ML model:

| P < 0.062 | 0 |
|---|---|
| 0.062 <= P < 0.4 | $-2^{-P+1} + 1.916$ |
| 0.4 <= P <= 0.6 | P |
| 0.6 < P <= 0.938 | $2^P - 0.916$ |
| 0.938 < P | 1 |

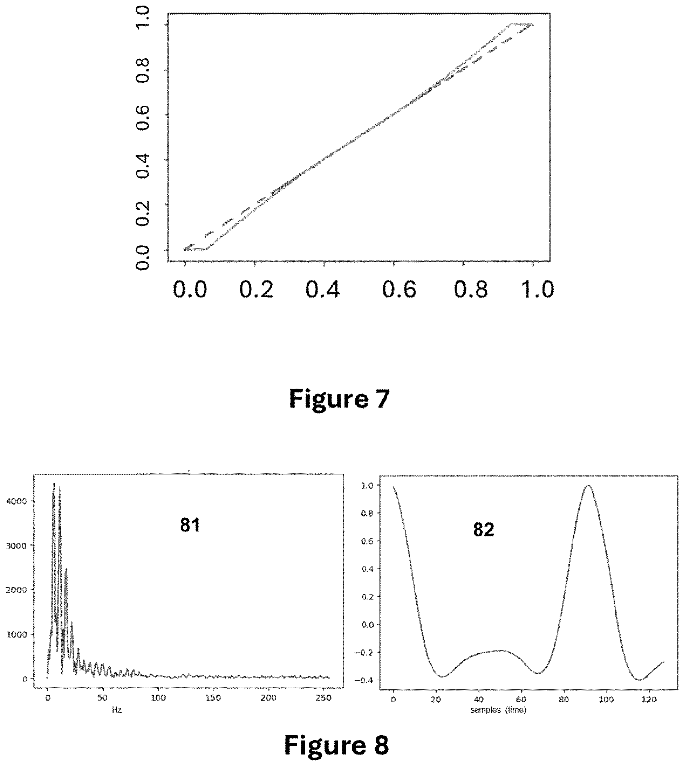

The above table 1 may be graphically observed in figure 7. Figure 7 shows the distribution of the partial detections in the Y axis, given outputs of the ML model in the X axis, compared to a distribution 1 to 1, in the dotted line. Figure 7 shows what the partial detection would be if the output from the ML was taken as output of the detection method or system (dotted line) and directly compared with a new distribution (continuous line). The resolution problem is solved by flattening areas where the machine learning model is unable to reach 0 or 1, similar to normalization. In examples, exponential functions of base two may be added in the extreme areas to reward predictions with high probability or high value of partial detection over partial detections with a probability closer to the center. Base 2 allows giving some reward at the same time that the reward does not increase too fast. Offsets may be chosen so that the end of one interval coincides perfectly with the beginning of the following interval.

The ML model may accept input data in batches of 256 data, at a rate of 1 data every 1ms, and the model may receive the data in 8 seconds. The ML model may be configured to provide an output with a partial detection of life as if passing the 256 values in parallel.

Hyperparameters may be configured such as number of trees and number of branches, for example branch depth or number of nodes to get to a result. The number of trees may be between 15 and 50, for example 25.

In some examples, at least a portion of the radar signal is processed by machine learning, ML, model, wherein the ML model is based on decision trees including a plurality of branches and a plurality of nodes; and the ML model includes, for each node of the plurality of nodes, one or more parameters defining the availability of the following node, or branch "hanging" from said node. This is referred to as parametrization. Parametrization allows that an architecture of the ML model, or the decision trees, may be fixed, but an "operating" architecture may be used in particular scenarios. The operating architecture may comprise less branches than the architecture. The parameters may include values which are not reachable by the execution of the decision tree. The examples comprise that the ML model is trained to obtain a partial detection of life in a vehicle; the ML model is loaded into a memory; and the decision trees architecture is modified by varying one or more of the parameters defining the availability of each node.

Such parameters may allow post-processing techniques which may be applied such as post-processing pruning. The parametrization may allow therefore the CI method to be embedded in a microprocessor in particular in a motor vehicle context, as explained below.

Pruning allows that, in decision trees, irrelevant or redundant branches may be removed, simplifying the tree structure. This makes the tree lighter and faster, beneficial for systems with hardware limitations and where low latency is required, as in the case of detection of life in motor vehicles. Pruned trees require fewer calculations, which reduces the time needed to make predictions in the context of the computer-implemented methods of the present disclosure where detection of life is expected to be made in real time or with minimal response times. By eliminating weights or irrelevant components, the trees take up less disk space and RAM which allows deploying models on a micro-controller or controller according to the present disclosure. Pruning allows better trees maintenance and updating since simpler, smaller trees are easier to understand and debug. This facilitates to update or retrain the ML model when the data or system conditions change, for example when training the ML model for different operation conditions. In the methods of detection of life of the disclosure pruning allows fast decisions with interpretable models.

The ML model may be trained offline or may be trained before being implemented or operated in an actual radar sensor system, for example in a motor vehicle. The ML model may be trained with data received from a database. Once the ML model is trained, the ML model may be loaded into a memory, for example a memory chip, and for example solid-state memory chip.

Usually when designing a system in a decision tree all the branches cover all the possibilities of the decision tree. If the tree needs to be specified for a specific implementation to output a partial detection of life of, e.g., a child, there are branches which will not be necessary for the specific implementation and they are cut or removed or pruned. The branches are encoded in a programming code, for example. This method creates a problem: if a shape of a vehicle compartment is modified, for example with a new shape, or if a specific implementation comprises to detect the life of a dog, the ML model needs to be retrained to provide a new decision tree. If pruning has been performed, the only option available is to create a new programming code reflecting the new training.

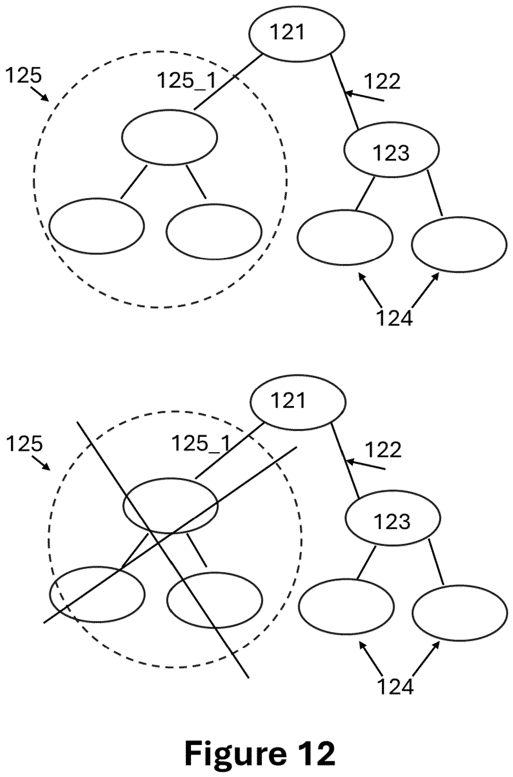

In the present disclosure and examples, each branch of the tree is parameterized before pruning, and in those branches that would in principle be removed, the parameter is assigned an unreachable value. In this way the implementation of the method will never reach that branch and the method is implemented as if the branch did not exist. If later on, it is necessary to use that previously unreachable branch due to necessary changes in the decision tree (e.g., change of shape or detection of a different target), the parameter of that branch may be changed without having to generate new programming code. In cases where the ML model needs an update or being re trained, this solution provides an ability to mutate the ML model's structure via parametrization. A parameter set may be designed so that the parameter set is able to determine the ML model's structure without the need for changing the code of the computer-programmed ML model. The parameters may indicate that, in the case of using a ML based on decision trees, a 'maximum forest' may not be reachable but may have a size that can fit to be micro embedded. The parameters may be modified by diagnostics. In practice, this methodology may be understood as a pruning. Some parameters are inserted and the tree is restructured, the shape of the tree being modified. Parametrization may be node-based but may be branch-based. Figure 12 shows an example representation of node-based parametrization of a ML model. As shown in figure 12, every decision tree execution begins in a root node 121. Once the information in the root node is checked, a following node, for example decision node 123 is computed. The reference numbers in figure 12 comprise splitting 122, leaf nodes 124, and branch 125. The branch 125 may be "virtually" pruned by parametrization, by setting parameter 125_1 associated to node 126 to an unreachable value, so that neither the node 126 nor the branch 125 are reachable or available, shown as a crossed branch 125 in figure 12. All the parameters are set for each specific node in a tree. In examples, parametrization is set for each node in each decision tree within the model. In examples, the ML model may be limited to 30 nodes within 25 trees. Each time a node is processed, the parameters corresponding to each node, which may be indicated in a position determined by an index, may be compared against a "tree threshold" or tree depth, and, if the comparison is true, the following node is processed; otherwise, the method may detect no life inside the vehicle.

Parametrization may allow varying the operating architecture of the ML model without the need to be reprogrammed in a computer system. A variation in the architecture may be necessary when the model needs to be retrained to detect life in a different scenario, for example, upon a variation in the shape of the vehicle compartment.

Parametrization provides the ability to mutate a ML model structure via its parametrization.

In some examples, the LGBM ML model of the disclosure comprises leaves depending on branches, where the leaves may be of two categories: detection of life positive or detection of life negative. Post-pruning steps may be implemented to cancel or eliminate some of the branches. In examples a tree comprises a maximum number of leaves and branches covering the maximum possibilities of the ML model independently of the inputs, which inputs are defined by hyper parameters. Once the method is flashed or embedded in a microprocessor, the structure of the ML model is not modifiable. Parameters may be modified instead. When implementing the embedded ML model, variables in memory result in equivalent variables as if the whole tree existed but, in practice, the leaves and branches may have been pruned. In examples, the implemented or operative tree may be modified without the need to change the flashed ML model or without changing the code in case the ML model is software implemented, by adjusting parameters. In examples where the ML model needs to be modified, for example for vehicle diagnostics, instead of flashing new code, new parameters may be inserted into a module or processor connecting to a computing system implementing the methods of the disclosure.

In examples, the CI method for detection of life within the vehicle comprises, before generating the partial detections based on sliding windows as explained in the disclosure, a "first stage" procedure which provides two different results as its output: "occupied or empty" or "life detection positive or life detection negative" respectively. The first stage procedure may comprise, in examples, a detection process each time a data batch of a signal is received. The detection process is at least based on the received radar signal during a sliding window. After an initialization of the method, samples may be recorded every second and appended to the previous ones, using strategies such as FIFO (First In, First Out) or LIFO (Last In, First Out), depending on the processing or storage requirements; then, the variance from the received data may be computed to life detection in the vehicle. Variance may be computed sliding window by sliding window. The window's length may depend on the amount of radar signal or data received, which may vary between samples corresponding to one second up to seven seconds, in one second steps. The variance result may be compared with a "variance threshold". If the variance exceeds the variance threshold, then the life detection may be positive, whereas if the variance does not exceed the variance threshold, then the life detection may be negative. The threshold may be computed by multiplying an "empty car variance" by a "particular variance ratio". In examples the foregoing comprises: the variance ratio may be 3; each time the variance exceeds the variance threshold, the variance ratio is subtracted by 0,5; and when the variance ratio reaches 1,5, the variance ratio is no longer decreased. The first stage procedure may comprise a different GORS procedure which comprises counting a number of positive results and negative results, and computing a confidence level and a final outcome based on the counts. The first stage procedure may provide life presence results with low confidence levels until there are enough samples to launch a second stage procedure, where the "second stage procedure" comprises the generation of partial detections and the preliminary detection based on the preceding partial detections, as disclosed in the examples above.

Some examples include a system comprising a 24GHz radar installed in a car for detection of life inside a vehicle in a maximum time of 10 seconds. The system or computing system comprises one or more controllers or processors adapted to or configured to perform the CI methods of the disclosure, where the CI methods output a result of detection of life every second using sliding windows of 7.68 seconds. The CI methods find a simple and lightweight solution to provide Life Presence Detection LPD in a vehicle. In some examples of the CI methods of the disclosure, to generate a detection of life based on the radar signal comprises preprocessing the radar signal. The detection of life is, in these examples, based on the preprocessed radar signal.

The preprocessing may comprise performing feature extraction. The preprocessing may comprise feature extraction by computing at least one of: power spectrum and autocorrelation of the radar signal. Figure 8 shows the power spectrum of a radar signal, where the plot 81 shows the radar signal in the frequency domain in Hz and the plot 82 shows the autocorrelation of the radar signal in time domain in samples.

Power spectrum comprises a representation of the radar signal in the frequency domain. Determining the power spectrum may comprise using a Fourier transformation of the radar signal and, in some cases, a normalized spectrum is used.

Autocorrelation is an optional feature obtained by preprocessing which, in the CI methods of the present disclosure, may represent breathing rate patterns of a subject, e.g., child, in a motor vehicle. The autocorrelation of the radar signal provides information about the similarity between a part, for example a first half, and a second part, for example a second half of the radar signal. A lag of 128 samples may be used. If a determined pattern is seen to be periodic, this may imply that there is a high probability that the vehicle is occupied by a subject, e.g., child. If the autocorrelation of the radar signal provides a signal similar to noise for which a periodic pattern may not be obtained, then, this may imply that there is a low probability that the vehicle is occupied by a subject, e.g., child.

Some results have demonstrated that the implementations using ML models using power spectrum and autocorrelation provide better results than heuristics approaches.

In some examples preprocessing may comprise performing centering the radar signal.

In some examples preprocessing may comprise stretch correction. In cases where the radar signal is processing in sliding windows, some windows may contain samples at the beginning of the radar signal that do not contain information: such windows with no information are deleted and the remaining radar signal may be centered.

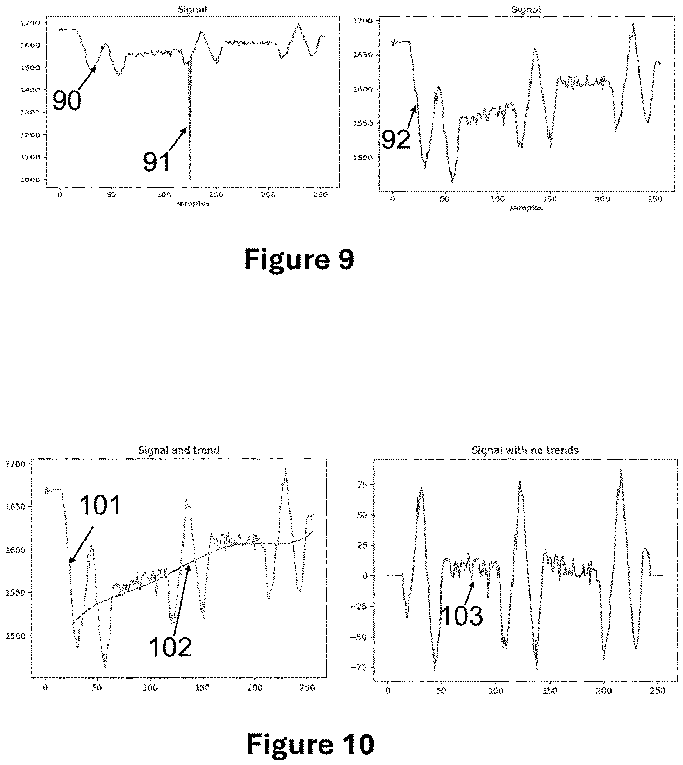

In some examples preprocessing may comprise outlier correction. Figure 9 shows the radar signal 90 with an outlier 91 to be eliminated. The figure shows the preprocessed signal 92 where the outlier has been removed and interpolated. The radar signal may contain glitches and outlying values that can distort the detection of life. To avoid this situation, the values that surpass a certain threshold, which may be computed based on a Median Absolute Deviation, may be corrected by means of, for example, a linear interpolation.

In some examples preprocessing may comprise trend removal which may correct the transient and possible trends in the signal. Figure 10 shows an example of trend removal to the radar signal 101. Trend removal may comprise performing a polynomial approximation, which corresponds to the trend 102 of the radar signal 101, and subtracting it from the radar signal. The trend is corrected and only the wavy behavior 103 is maintained.

In particular examples of the CI methods of the disclosure, the radar signal from radiation reflected as a result of the transmitted radar wave comprises at least a phase, I, radar signal and a quadrature, Q, radar signal; in these examples, operating the controller to generate a detection of life within the vehicle comprises determining the radar signal, wherein the radar signal is determined by either combining the I radar signal with the Q radar signal or by selecting one of the I radar signal and/or the Q radar signal, preferably by selecting the I or Q radar signal with the greatest signal-to-noise ratio, SNR. The I and Q signals may be preprocessed before being combined or selected. In some examples, once both signals are preprocessed, one of them is chosen to generate a detection of life within the vehicle by implementing any of the examples of the CI method of the disclosure.

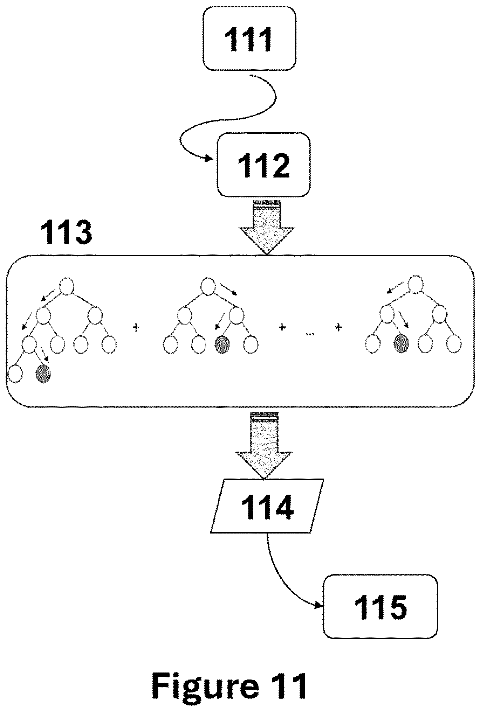

Figure 11 shows an example representation of the complete implementation of the CI method of the disclosure. Figure 11 shows in block 111, the preprocessing of a radar signal; in block 112, the inputting of the preprocessed radar signal into a ML model 113. In the example of figure 11 the partial detection is obtained by processing a portion of the radar signal in a sliding window by a machine learning model. Figure 11 shows, in block 114, a block representing the partial detections provided by the ML model 113. The partial detections are fed into block 115 representing a Global Output ranking system GORS so that the GORS provides a preliminary detection of life based on two or more partial detections of life.

A particular example of the CI method of the disclosure comprises a training phase in which a dataset composed of different test plans including 30563 radar signals is used. 21222 radar signals out of the 30563 radar signals correspond to occupied scenarios and 9341 to empty/false alarms/proximity scenarios.

The dataset may be balanced or unbalanced using weights for each class at training time. The weights may be 1 for life and for and empty in order to avoid detecting proximity scenarios. These weights may be used to force the CI method in the training stage to give priority the more weighted data. In this case, as the "child presence detection" CPD cases are well detected, adding some weight (importance) to proximity and false alarm cases, improves the performance on these cases.

Of every test plan, I (in-phase component of the signal amplified) and Q high (quadrature component of the signal) are used independently in the training dataset. The dataset do neither contain all the windows nor contain the same number of I and Q signals. Before adding each stretch, a previous cleaning of the data and the corresponding preprocessing may be performed. For example, if the stretch has a good signal in I but bad signal in Q, I is added and Q is ignored.

The CI method of this example includes a validation phase. The test plan used for validation are the recordings grabbed in another scenario. This test plan contains mostly proximity and CPD scenarios. Hyperparameter tuning of the algorithm is performed in this validation stage until the configuration that better suits the dataset is found.

The results of the validation are good enough to ensure that the algorithm is properly working.

The confusion matrix of this example provides a 98,49% of accuracy and an F1 score of 97,46% providing:

- a positive prediction in

    - 1364 cases where the ground truth is positive,
    - and 57 cases where the ground truth is negative;

- a negative prediction in

    - 14 cases where the ground truth is positive,
    - And 3255 cases where the ground truth is negative.

Any of the method described in the disclosure may be implemented by computing systems.

Any module in any of the computing systems of the disclosure may comprise electronic means, that is, electronic configuration, and/or may be a programmable electronic device such as a Complex Programmable Logic Device, CPLD, a Field Programmable Gate Array, FPGA or an Application-Specific Integrated Circuit, ASIC.

Examples of a module or controller may be a computer system, which may comprise a memory and a processor, the memory is adapted to store a set of computer program instructions, and the processor is adapted to execute these instructions stored in the memory in order to generate the various events and actions for which the control module has been programmed.

Examples of a module may comprise specific hardware configured to perform a specific routine or subroutine of a program.

The memory may be comprised in the processor, e.g. an EEPROM, Flash, Ram, SRAM or may be external. In the case of an external memory, it can be, for example, data storage means such as magnetic disks, e.g., hard disks, optical disks, e.g., DVD or CD, memory cards, flash memory, e.g., pen drives, or solid-state drives, SSD based on RAM, based on flash, etc. Such storage means may be part of the radar sensor system and / or arranged remotely, wired or wirelessly connected. In the case of being remotely arranged, the communication established between the radar sensor system and the storage means can be ensured by, for example, username / password, cryptographic keys and / or by an SSL tunnel established in the communication between the radar sensor system and the storage means.

A set of computer program instructions may be executable by the controller or processor, such as a computer program, and may be stored in a physical storage means, such as those mentioned, but may also be carried by a carrier wave or the carrier medium. it can be any entity or device capable of carrying the program, such as electrical or optical, which can be transmitted via electrical or optical cable or by radio or other means. In this way, when the computer program is contained in a signal that can be transmitted directly by means of a cable or other device or means, the carrier means can be constituted by said cable or another device or means.

The computer program may be in the form of source code, object code, a code intermediate source and object code such as in partially compiled form or in any other form suitable for use in implementing the method. The carrier may be any entity or device capable of carrying the computer program.

When the computer program is embodied in a signal that may be conveyed directly by a cable or other device or means, the carrier may be constituted by such cable or other device or means.

Alternatively, the carrier may be an integrated circuit in which the computer program is embedded, the integrated circuit being adapted for performing, or for use in the performance of, the relevant methods.

Any one of the modules may be based on a low-power hardware device like a microcontroller, a System-On-Chips, SOC, a Programmable SoC, PSoC or an ASIC, although, in some scenarios, it may be possible to use other hardware like an FPGA, a CPLD or a Digital Signal Processor, DSP. Any one of the modules may also contain different types of embedded memories to store data and program instructions. In addition, any one of the modules may include other electronic components like oscillators or programming interfaces, e.g., JTAG, ICSP.

Any one of the modules may also be implemented by using different types of electronic devices. Such devices include Central Processing Units, CPUs, microcontrollers, FPGAs, ASIC, or SOCs. CPUs are powerful but consume too much energy for small battery-powered devices or low power systems..

Although only a number of examples of the present electronic device and assembly method thereof have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. Reference signs related to drawings placed in parentheses in a claim are solely for attempting to increase the intelligibility of the claim, and shall not be construed as limiting the scope of the claim.

## Claims

1. A computer-implemented method for detection of life within a vehicle using a radar sensor system, the radar sensor system comprising at least one transmitter, at least one receiver, and a controller, the computer-implemented method comprising:

   - transmitting, using the at least one transmitter, radar waves to at least one vehicle compartment of the vehicle;
   - generating, using the at least one receiver, a radar signal from radiation reflected as a result of the transmitted radar waves; and
   - operating the controller to, based on the radar signal, generate a detection of life within the vehicle.

2. The computer-implemented method of claim 1, wherein transmitting the radar waves comprises transmitting 23GHz to 26GHz radar waves by a doppler radar sensor.

3. The computer-implemented method of any one of claims 1 or 2, wherein to generate the detection of life comprises:

   - outputting two or more partial detections of life;
   - wherein each partial detection is obtained by processing a portion of the radar signal in a sliding window, the sliding window being of a predefined duration;
   - wherein each partial detection of life is obtained by processing the respective successive portions of the radar signal in successive shifts by an offset of the sliding window; and
   - determining a preliminary detection of life based on the two or more partial detections of life.

4. The computer-implemented method of claim 3, wherein outputting two or more partial detections of life comprises outputting a first partial detection of life and a further partial detection of life, wherein to generate the detection of life comprises:

- outputting the first partial detection of life by processing a portion of the radar signal in the sliding window;
- iteratively, until a final condition is met:

- shifting the sliding window by an offset;
- outputting a further partial detection of life by processing a portion of the radar signal in the shifted sliding window; and
- determining a preliminary detection of life based on the first partial detection and one or more further partial detections of life.

5. The computer-implemented method of claim 4, wherein the final condition comprises any one of the following final conditions:

- the sliding window has been shifted a maximum number of times; or
- a detection time has elapsed; or
- an external finalization alert is received.

6. The computer-implemented method of any one of claims 1 to 5, wherein to generate the detection of life comprises:

- outputting a first partial detection (p1) of life by processing a portion of the radar signal of the sliding window in a first position (T1);
- outputting a second partial detection (p2) of life by processing a portion of the radar signal of the sliding window in a second position (T2), the second position (T2) of the sliding window resulting from shifting the sliding window in the first position (T1) by an offset (Δ);
- determining a first global detection (GD1) based on the first and second partial detections (p1, p2);
- and wherein determining the preliminary detection of life (P) based on the two or more partial detections comprises: storing the first global detection (GD1) in a first location of a data structure; and determining the preliminary detection of life based on contents of the data structure.

7. The computer-implemented method of any one of claims 1 to 6, wherein a partial detection is obtained by processing a portion of the radar signal in a sliding window by a machine learning model.

8. The computer-implemented method of any one of the preceding claims, wherein to generate, based on the radar signal, a detection of life comprises preprocessing the radar signal by performing feature extraction to the radar signal.

9. The computer-implemented method of any one of the preceding claims wherein

- the radar signal from radiation reflected as a result of the transmitted radar wave comprises at least a phase I radar signal and a quadrature Q radar signal;
- operating the controller to generate a detection of life within the vehicle comprises determining the radar signal, wherein the radar signal is determined by:

- combining the I radar signal with the Q radar signal or
- by selecting one of the I radar signal and/or the Q radar signal, preferably by selecting the I or Q radar signal with the greatest signal-to-noise ratio, SNR.

10. The computer-implemented method of any one of the preceding claims, wherein at least a portion of the radar signal is processed by machine learning, ML, model, wherein:

- the ML model is based on a decision trees architecture including a plurality of branches and a plurality of nodes;
- the ML model includes, for each node of the plurality of nodes or for each branch of the plurality of branches, one or more parameters defining an availability of the node or the branch;
- the ML model is trained to obtain a partial detection of life in a vehicle;
- the ML model is loaded into a memory;
- and the method comprises modifying the decision trees architecture by varying one or more of the parameters defining the availability of the node or the branch.

11. A system comprising a controller configured to perform a method to generate, based on a received radar signal, a detection of life, the method comprising:

- outputting two or more partial detections of life;
- wherein each partial detection is obtained by processing a portion of the radar signal in a sliding window, the sliding window being of a predefined duration;
- wherein each partial detection of life is obtained by processing the respective successive portions of the radar signal in successive shifts by an offset of the sliding window; and
- determining a detection of life based on the two or more partial detections of life.

**12.** The system of claim 11, wherein the controller is further configured to generate a detection of life by outputting a first partial detection of life and a further partial detection of life, and wherein to generate the detection of life comprises:

- outputting the first partial detection of life by processing a portion of the radar signal in the sliding window;
- iteratively, until a final condition is met:

- shifting the sliding window by an offset;
- outputting a further partial detection of life by processing a portion of the radar signal in the shifted sliding window; and

- determining a preliminary detection of life based on the first partial detection and one or more further partial detections of life.

**13.** The system of claim 11 or 12, wherein the controller is further configured to generate, based on the radar signal, the detection of life by preprocessing the radar signal by performing feature extraction to the radar signal.

**14.** The system of any one of claims 11 to 13, wherein the controller is further configured to generate, based on the radar signal, the detection of life by preprocessing the radar signal, wherein the radar signal comprises a phase, I, radar signal and a quadrature, Q, radar signal by:

- combining the I radar signal with the Q radar signal; or
- by selecting one of the I radar signal and/or the Q radar signal, preferably by selecting the I or Q radar signal with the greatest signal-to-noise ratio, SNR.

**15.** The system of any one of claims 11 to 14 for detection of life, the system further comprising at least one transmitter and at least one receiver, and wherein

- the transmitter is configured to transmit radar waves; and
- the receiver is configured to generate the radar signal from radiation reflected as a result of the transmitted radar waves.

EP 4 764 593 A1

Figure 1

15

# Figure 2A

P=f(p1, p2)

**Figure 2B**

$$P=f(p1, p2, p3, p4, ..., pN)$$

## Figure 3

200

201  202  203

ML    301

p1  p2  p3  p4  ... pN

$P = f(p1, p2, p3, p4, ..., pN)$

## Figure 4

200

201  202  203

>th?

ML

401

402

p1  p2  p3  p4  ... pN

$P = f(p1, p2, p3, p4, ..., pN)$

EP 4 764 593 A1

**Figure 5A**

| 501 | 1 | 2 | 3 | 4 | 5 | 6 | 7 | 8 | |
|---|---|---|---|---|---|---|---|---|---|
| | p1 | p2 | p3 | | | | | | → P_3 |
| | GD1 | p4 | | | | | | | → P_4 |
| | GD1 | p4 | p5 | | | | | | → P_5 |
| | GD1 | p4 | p5 | p6 | | | | | → P_6 |
| | GD1 | GD2 | p7 | | | | | | → P_7 |
| | GD1 | GD2 | p7 | p8 | | | | | → P_8 |
| | GD1 | GD2 | p7 | p8 | p9 | | | | → P_9 |
| | GD1 | GD2 | GD3 | p10 | | | | | → P_10 |
| | GD1 | GD2 | GD3 | p10 | p11 | | | | → P_11 |
| | GD1 | GD2 | GD3 | p10 | p11 | p12 | | | → P_12 |
| | GD1 | GD2 | GD3 | GD4 | p13 | | | | → P_13 |
| | GD1 | GD2 | GD3 | GD4 | p13 | p14 | | | → P_14 |
| | GD1 | GD2 | GD3 | GD4 | p13 | p14 | p15 | | → P_15 |
| | GD1 | GD2 | GD3 | GD4 | GD5 | p16 | | | → P_16 |
| | GD1 | GD2 | GD3 | GD4 | GD5 | p16 | p17 | | → P_17 |
| | GD1 | GD2 | GD3 | GD4 | GD5 | p16 | p17 | p18 | → P_18 |
| | GD1 | GD2 | GD3 | GD4 | GD5 | GD6 | p19 | | → P_19 |
| | GD1 | GD2 | GD3 | GD4 | GD5 | GD6 | p19 | p20 | → P_20 |
| | GDA | GD3 | GD4 | GD5 | GD6 | p19 | p20 | p21 | → P_21 |
| | GDA | GDB | GD5 | GD6 | GD7 | GD8 | p22 | | → P_22 |
| | GDA | GDB | GD5 | GD6 | GD7 | GD8 | p22 | p23 | → P_23 |
| | GDA | GDB | GDC | GD7 | GD8 | p22 | p23 | p24 | → P_24 |
| | GDA | GDB | GDC | GD7 | GD8 | GD9 | p25 | | → P_25 |

t

Figure 5B

**Figure 6**

No. windows

2 ●
3 ★
4 ▮
5 ○
6 ◄
7 +
8 ✳

# Figure 7

# Figure 8

**Figure 9**

**Figure 10**

**111**

**112**

**113**

**114**

**115**

# Figure 11

**Figure 12**

Europäisches
Patentamt

European
Patent Office

Office européen
des brevets

# EUROPEAN SEARCH REPORT

**Application Number**

EP 24 38 3414

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2022 132962 A1 (VALEO SCHALTER & SENSOREN GMBH [DE]) 13 June 2024 (2024-06-13) * paragraphs [0086] - [0089], [0092] - [0093], [0102] - [0106], [0108] * ----- | 1-10, 12-15 | INV. G01S7/285 G01S7/35 G01S7/41 G01S13/04 G01S13/50 G01S13/88 |
| X | DE 10 2023 111290 A1 (MARQUARDT GMBH [DE]) 7 November 2024 (2024-11-07) * paragraphs [0035] - [0037], [0048], [0053] * ----- | 1-3,7, 9-11,14 | |
| X | US 2024/172946 A1 (GOLOMBEK HAREL [IL] ET AL) 30 May 2024 (2024-05-30) * paragraphs [0260] - [0263] * ----- | 1,2,7,9, 14 | |

**TECHNICAL FIELDS SEARCHED (IPC)**

G01S

The present search report has been drawn up for all claims

| Place of search | Date of completion of the search | Examiner |
|---|---|---|
| Munich | 15 May 2025 | Unterberger, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 38 3414

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2025

| Patent document cited in search report | Publication date | Patent family member(s) | Publication date |
|---|---|---|---|
| DE 102022132962 A1 | 13-06-2024 | NONE | |
| DE 102023111290 A1 | 07-11-2024 | DE 102023111290 A1 | 07-11-2024 |
| | | WO 2024227579 A1 | 07-11-2024 |
| US 2024172946 A1 | 30-05-2024 | NONE | |

EPO FORM P0459

For more details about this annex : see Official Journal of the European Patent Office, No. 12/82